# EUROPEAN PATENT APPLICATION

(11) **EP 4 495 083 A1**
(43) Date of publication of application: **22.01.2025**
(21) Application number: 23382744.3
(22) Date of filing: 20.07.2023
(51) Int. Cl.: C04B 28/04, C04B 18/04, E01D 19/08

(54) **HYDRAULIC COMPOSITION FOR ULTRA-HIGH PERFORMANCE CONCRETE AND ULTRA-HIGH PERFORMANCE GROUT**

(71) Applicant: Sika Technology AG, 6340 Baar (CH)
(72) Inventor: CALAMA, Juan Antonio, 28108 Madrid (ES)
(74) Representative: Sika Patent Attorneys

(57) **Abstract**

The present invention relates to hydraulic compositions useful as ultra-high performance concrete and ultra-high performance grouts and comprising
a) 100 mass parts of Portland Cement,
b) 20 - 60, preferably 45 - 55, mass parts of at least one pozzolane,
c) 30 - 120 mass parts, preferably 50 - 85 mass parts of at least one aggregate, preferably sand, having an average particle size D50 of between 63 µm and 8 mm, preferably between 200 µm and 3 mm,
d) 0.01 - 10 mass parts of a cement dispersant, and
e) not more than 30 mass parts, preferably 15 - 25 mass parts of water.

## Description

### Technical Field

The present invention relates to hydraulic compositions useful as ultra-high performance concrete and ultra-high performance grouts.

### Background of the invention

Cementitious materials are generally used for concretes or grouts, which usually also contain aggregates and additives. For use, the cementitious composition is mixed with water so that a reaction takes place between the cement and the water, commonly referred to as hydration. After hydration, the cement hardens and forms a solid building material.

In recent years, special concretes such as high-performance concrete (HPC) and ultra-high performance concrete (UHPC) as well as high-performance and ultra-high-performance grouts (UHPG) have been introduced to the market.

These special concretes and mortars typically contain a high proportion of mineral binder and a high proportion of aggregates with a fine grain size. The high proportion of fines results in good homogeneity of the materials, and the high proportion of mineral binder results in high strength. High-strength concretes and grouts also contain little to very little water, since the water not needed for cement hydration evaporates, leaving pores that reduce strength.

The formulation of UHPC and UHPG can be difficult especially where strength and durability requirements have to be balanced against workability requirements.

WO 2015/193419 (Lafarge) discloses ultra-high performance concrete formulations having high strength and which are not self-levelling. Such formulations are reported to be for example suitable for applications on surfaces with an inclination or that are vertical. The WO 2015/193419 formulations inter alia use an amount of water higher than typically used for UHPC and UHPG. However, higher amounts of water frequently lead to other problems, such as for example higher shrinkage. Higher shrinkage in turn often leads to cracks, voids, or delaminations which may impair the durability.

There exists still a need for UHPC and UHPG formulations that have optimized workability, strength, and durability performance. The present invention addresses this need.

### Summary of the invention

It is an object of the present invention to provide hydraulic compositions which develop ultra-high strength upon curing. Hydraulic compositions of the present invention further should have good workability and low shrinkage. Hydraulic compositions of the present invention are useful as ultra high-performance concrete and ultra high-performance grouts.

Strength within the present context relates to the flexural and/or compressive strength of a hydraulic composition after curing. Flexural strength and compressive strength can be measured according to standard EN 12190. A measure for the workability is the slump flow measured according to standard EN 13391. A measure for the durability is the shrinkage measured according to standard EN 12617-4. Especially a low shrinkage or low expansion is an indication for increased durability.

Preferably, ultra-high strength relates to a compressive strength of not less than 150 MPa of the fully cured hydraulic composition. Full curing can be assumed to be achieved after 28 days curing at 25°C, 50% r.h, and 1013 mbar.

It has surprisingly been found that a hydraulic composition having a balanced dosage of at least one pozzolane, aggregates, and a cement dispersant in relation to Portland cement has advantageous strength, workability, and low shrinkage.

The objective of the present invention therefore is solved by the subject matter of claim 1.

Further aspects of the present invention are the subject of independent claims. Preferred embodiments are the subject matter of dependent claims.

### Ways to carry out the invention

In a first aspect the present invention relates to a hydraulic composition comprising
a) 100 mass parts of Portland Cement,
b) 20 - 60, preferably 45 - 55, mass parts of at least one pozzolane,
c) 30 - 120 mass parts, preferably 50 - 85 mass parts of at least one aggregate, preferably sand, having an average particle size D₅₀ of between 63 µm and 8 mm, preferably between 200 µm and 3 mm,
d) 0.01 - 10 mass parts of a cement dispersant, and
e) not more than 30 mass parts, preferably 15 - 25 mass parts of water.

Within the present context, a hydraulic material is a material that reacts with water to form solid hydrates. Solid hydrates in particular are calcium silicate hydrates and/or calcium aluminate hydrates. Hydraulic materials in particular are cements, especially Portland cement. A hydraulic composition starts to cure when water is added.

Pozzolanes are materials that react hydraulically (i.e. with water to form solid hydrates) only in the presence of hydroxides, especially in the presence of calcium hydroxide. This is called pozzolanic activity. Within the present context the term "pozzolane" also encompasses materials otherwise called latent hydraulic materials. Portland cement can, for example, be a source of calcium hydroxide to enable hydraulic reaction of pozzolanes.

Portland cement is preferably chosen from at least one cement of the group consisting of CEM I, II, III, IV or V according to standard EN 197-1, most preferably of type CEM I. Of course, Portland cement according to other standards, for example ASTM or Chinese standards, is also suitable.

The at least one pozzolane preferably is chosen from clays, preferably calcined clays, especially metakaolin, fly ash, slag, preferably ground granulated blast furnace slag, silica fume, or mixtures thereof. In particular, the hydraulic composition comprises a mixture of fly ash and silica fume, or a mixture of ground granulated blast furnace slag and silica fume, or a mixture of ground granulated blast furnace slag and fly ash and silica fume.

Very preferably, in a hydraulic composition of the present invention the at least one pozzolane is a mixture of fly ash and silica fume.

According to embodiments, a hydraulic composition of the present invention comprises a mixture of fly ash and silica fume and a weight ratio between fly ash and silica fume is between 2:1 - 10:1, preferably 6:1 - 7:1.

It has been found that the use of a mixture of fly ash and silica fume in such weight ratio is particularly suitable to balance the workability, durability and strength requirements. Especially, by using such mixture of fly ash and silica fume, a low amount of water can be used in a hydraulic composition which leads to low shrinkage, especially low plastic shrinkage, and at the same time the workability, for example measured as slump or slump flow, can be maintained at a satisfactory level for practical applications.

Fly ash can be class C fly ash or class F fly ash according to standard ASTM C618. Preferably, fly ash is class F fly ash according to standard ASTM C618.

The fineness of Portland cement is not particularly limited. It is, however, possible to use Portland cement of standard fineness such as for example Portland cement with a Blaine fineness of at least 2000 cm²/g, preferably at least 2800 cm²/g. The maximum Blaine fineness of Portland cement can for example be 12000 cm²/g. A suitable Portland cement may for example have a Blaine fineness between 2800 - 6500 cm²/g. Blaine fineness within the present context can be measured according to standard DIN EN 196-6:2019-03.

The particle size of the at least one pozzolane is not particularly limited. It is, however, possible to use pozzolanes with an average particle size D₅₀ of between 0.5 µm and 1 mm, preferably between 1 µm and 100 µm, more preferably between 2 µm and 50 µm. It is particularly preferred that the at least one pozzolane has a particle size D₉₀ of not more than 1 mm, preferably not more than 500 µm, more preferably not more than 150 µm, still more preferably not more than 80 µm.

The particle size can be determined by laser light diffraction as described in standard ISO 13320:2009. In particular, a MasterSizer 2000 instrument with a Hydro 2000G dispersing unit and the Mastersizer 2000 software from Malvern Instruments GmbH (Germany) can be used for this purpose. As a result of particle size determination, one or more Dₓ values are reported. A Dₓ value has the meaning that a proportion of the given assembly of particles of x% has a lower particle size than the given value. Thus, a D₉₀ value, for example, means that 90% of the assembly of particles has a particle size smaller than the D₉₀ value given. Accordingly, the average particle size corresponds in particular to the D₅₀ value (50% of the particles are smaller than the given value, 50% are correspondingly bigger).

According to embodiments, a hydraulic composition of the present invention additionally comprises 10 - 250, preferably 30 - 100, mass parts of a filler having an average particle size D₅₀ of below 200 µm, preferably below 150 µm, especially below 63 µm.

Fillers, within the present context, are characterized by an average particle size D₅₀ of below 200 µm, preferably below 150 µm, especially below 63 µm. Fillers are materials that do not themselves have hydraulic or pozzolanic activity. Fillers may be chosen from siliceous and/or carbonaceous materials. Preferred fillers within the present context are quartz sand, fine calcium carbonates and/or finely ground rock flours, in particular finely ground limestone.

Aggregates within the present context have an average particle size D₅₀ of between 63 µm and 8 mm, preferably between 200 µm and 3 mm. A particularly preferred aggregate is sand. It is possible, and in some cases preferred, that the aggregate comprises fractions f aggregate of different particle size. For example, it can be preferred for a hydraulic composition of the present invention to comprise various fractions of sand, such as, for example, one fraction of sand with a particle size between 0.06 - 0.3 mm, another fraction of sand with a particle size between 0.1 - 0.6 mm, another fraction of sand with a particle size between 0.3 - 0.9 mm, another fraction of sand with a particle size between 0.7 - 1.2 mm, another fraction of sand with a particle size 1.5 - 2.2 mm. The particle size of solid materials in the mm range can be determined by sieve analysis according to standard EN 12192-1:2002 or standard EN 933-1:2012.

According to embodiments, the hydraulic composition of the present invention comprises a cement dispersant which is a comb polymer.

In particular, the comb polymer comprises
(i) repeating units **A** of the general structure (**I**), 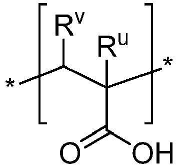 and
(ii) repeating units **B** of the general structure (**II**), 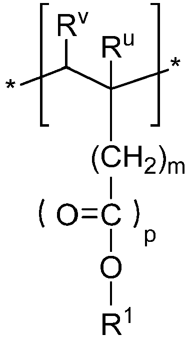 where
   each R^{u} independently of another is hydrogen or is a methyl group,
   each R^{v} independently of another is hydrogen or is COOM, where M is H, an alkali metal, an alkaline earth metal, or an ammonium group,
   m = 0, 1, 2 or 3,
   p = 0 or 1,
   each R¹ independently of another is -[YO]ₙ-R⁴, where Y is an alkylene group with 2 - 4 carbon atoms, and R⁴ is H, an alkyl, cycloalkyl, or alkyaryl group with 1 - 20 carbon atoms, n = 2 - 350, and
   the repeating units **A** and **B** are present in the comb polymer in a molar ratio of **A** : **B** between 10 : 90 - 90 :10.

Methods for producing such comb polymer of the present invention are known in the art. For example, comb polymers can be produced by radical polymerisation of ethylenically unsaturated monomers. Comb polymers with desired structures and properties can be obtained by specific selection and ratio of the monomers. Such radical polymerisation as well as resulting comb polymers are described, for example, in WO2012/084954. Alternatviely, comb polymers can be prepared by polymer analogous reaction. Therein, a polycarboxylic acid backbone is synthesized in a first step and subsequently, side chains are attached to the polycarboxylic acid backbone, for example by esterification. Such polymer analogous reactions as well as resulting comb polymers are described, for example, in EP1138697 and WO2005/090416.

Comb polymers of the present invention may have a random structure or may have a block or gradient structure. The terms "random", "block", and "gradient" refer to the distribution of monomeric units **A** and **B** along the backbone of the polymer.

It can be preferred that the monomeric units **A** and **B** are arranged in a block or gradient along at least one direction of the backbone.

It has been found that a selection of structural parameters within the comb polymer of the present invention influences the workability. Especially, the choice of the molar ratio of monomeric units **A** : **B,** the choice of the parameters "n" and "p" as well as the arrangement of monomeric units A and B in a random, block, or gradient structure influences the effect of the resulting comb polymer on workability.

It is possible for a hydraulic composition of the present invention to additionally comprise 1 - 5 mass parts of a source of calcium sulfate.

The source of calcium sulfate can be gypsum, plaster of Paris, α-calcium sulfate hemihydrate, β-calcium sulfate hemihydrate, calcium sulfate dihydrate, and/or anhydrite. Preferably the source of calcium sulfate is anhydrite.

A hydraulic composition of the present invention may additionally comprise fibers, preferably metallic fibers or fibers made from thermoplastic materials, especially steel fibers, coated steel fibers, for example brass coated steel fibers, carbon fibers, or fibers made from polyethylene and/or polypropylene. Fibers can be coated, surface modified, embossed, and/or bent.

The additional use of fibers can further increase the strength, in particular the flexural strength and/or compressive strength, of a hydraulic composition after curing. Fibers may additionally reduce the shrinkage of a hydraulic composition upon curing.

It can be preferred to use fibers with a length of between 5-50 mm. The diameter of fibers may be in the range between 1 - 800 µm. It is, however, also possible to use fibers of different dimensions.

A hydraulic composition of the present invention may additionally comprise a defoamer.

A hydraulic composition of the present invention may comprise further additives or admixtures, different from the components described above. Further additives or admixtures especially can be accelerators, retarders, blowing agents, expanding agents, viscosity modifiers such as thickeners, pigments, biocides, or mixtures thereof.

It can be preferred that a hydraulic composition of the present invention comprises Portland cement and at least one pozzolane, preferably a mixture of silica fume and fly ash, in a weight ratio of 2:1. In particular, in a hydraulic composition of the present invention the weight ratio of Portland cement to fly ash is between 2:1 to 3:1.

It can be preferred that a hydraulic composition of the present invention comprises a filler and at least one pozzolane, preferably a mixture of silica fume and fly ash, in a weight ratio of 1:1.

It can be preferred that a hydraulic composition of the present invention comprises Portland cement and a filler in a weight ratio of 2:1.

In particular in a hydraulic composition of the present invention, a weight ratio of Portland cement to filler to at least one pozzolane, preferably a mixture of fly ash and silica fume, is 2:1:1.

It has been found that such weight ratios are particularly suitable to balance the workability, durability and strength requirements of a hydraulic composition.

In another aspect the present invention relates to a method for the production of a hydraulic composition as described above, said method comprising the steps of
a) preparing a dry mix comprising Portland Cement, pozzolane, filler, and aggregate, and
b) admixing water to the dry mix obtained in step a),
wherein cement dispersant is added during preparation of the dry mix in step a) and/or together with the mixing water in step b).

Methods to prepare a dry mix are known to the skilled person per se. A dry mix is a mix comprising water in an amount of not more than 5 w%, preferably not more than 1 w%, relative to the total weight of the dry mix.

It is possible within the present context to store the dry mix for example in a silo or a paper bag for prolonged periods of time prior to admixing the water. For example, a dry mix can be stored in a silo and transported to a construction site. Water may then be admixed on the construction site prior to use. Curing of a hydraulic composition starts when water is admixed.

It is, however, also possible to admix the water in a factory and then store the wet mix for a certain period of time and/or transport the wet mix to a construction site. The additional use of retarders or inhibitors may increase the time for storage before the wet mix starts to cure.

Preferably, in case the cement dispersant is added during preparation of the dry mix in step a), said cement dispersant is in the form of a free flowing powder. Likewise preferably, in case the cement dispersant is added together with the mixing water in step b), said cement dispersant is dissolved or dispersed in the mixing water.

In another aspect, the present invention relates to the use of a hydraulic composition as described above or prepared in a method as described above for the construction of new buildings, for the repair of existing buildings, or as a grouting material.

In particular, the hydraulic composition of the present invention can be used in a system according to principles 3, 4, and 7 of EN 1504-3, or in a system according to EN 1504-6, or as a high strength grout according to DAfStb guideline VeBMR, or as a class A, B, C non-shrink grout according to ASTM C1107, or as an ultra-high performance fiber concrete according to SIA 2052, or as a screed according to EN 13813.

DIN EN 1504-3 relates to products and systems for the protection and repair of concrete structures. Principle 3 relates to concrete restoration, principle 4 relates to structural strengthening, principle 7 relates to the preservation of restoration of passivity. A hydraulic composition of the present invention is thus especially suitable for the use as a mortar for concrete restoration, as well as mortar, concrete or crack filler for structural strengthening, as well as to increase the cover over rebars or to replace carbonated concrete. EN 1504-6 relates to products and systems to be used for the anchoring of reinforcing steel bars. Hydraulic compositions of the present invention are thus suitable to be used for the anchoring of reinforcing steel bars. Guideline VeBMR of the DAfStb relates to grouting materials with high early strength and compressive strength class C50/60 or higher. A hydraulic composition of the present invention is thus suitable to be used as supplementary concrete material and cement mortar in thin layers, for example for the grouting of joints or the concreting of columns in sleeve foundations. Guideline SIA 2052 relates to ultra-high performance fiber concrete for load-bearing structures. A hydraulic composition is thus suitable to be used in the construction or refurbishment of load-bearing structures. EN 13813 relates to cementitious screed materials for interior and exterior use. A hydraulic composition of the present invention can thus be used as a cementitious screed for interior or exterior use.

A hydraulic composition of the present invention preferably is used at temperatures between 4-50 °C. Normally, no heating is necessary to cure a hydraulic composition of the present invention. The use of a hydraulic composition of the present invention is preferably at a pressure of approximately 1 bar. Normally, no pressure increase or decrease is necessary to cure a hydraulic composition of the present invention.

In particular, a hydraulic composition of the present invention can be used for the construction, repair, and/or waterproofing of bridge decks.

In another aspect the present invention relates to a bridge deck comprising a hardened hydraulic composition as described above or prepared in a method as described above.

According to certain embodiments, the hardened hydraulic composition has a compressive strength of at least 120 MPa, preferably at least 140 MPa, after 28 days, determined according to EN 12190.

### Examples

The following table 1 shows an overview of raw materials used.

**Table 1 - raw materials**

| | |
|---|---|
| OPC | Ordinary Portland Cement (CEM I 52.5N) |
| Metakaolin | Metakaolin from high purity kaolin clay (0.1% of particles > 44 µm) |
| Fly ash | Class F fly ash; residue >0.045 mm: 18% |
| Silica fume | 96% SiO₂; primary particle size 0.1 - 0.3 µm |
| Filler 1 | Quartzitic filler (particle size D₅₀ = 35 µm) |
| Filler 2 | Quartz filler (particle size D₅₀ = 144 µm) |
| Sand | Quartz sand (0.1 - 0.6 mm) |
| CaSO₄ | Anhydrite |
| PCE | Polyacrylate with polyethylene oxide side chains (53 EO units) |
| Defoamer | Hydrocarbon based powdered defoamer |
| Fiber | Brass coated steel fiber, diameter 0.2mm, length 13 mm |

Dry mixes were prepared by thoroughly mixing the dry materials as indicated in below table 2 on a V mixer until visually homogeneous. Water was then added in the amount as indicated in below table 2 and mixing continued for an additional 5 minutes in a Hobart mixer.

Slump flow was measured according to standard EN 13391 5 minutes after the end of mixing. Shrinkage was measured according to standard EN 12617-4 after 24h. Flexural strength (FS) was measured according to standard EN 12190 after the time indicated in below table 2. Compressive strength (CS) was measured according to standard EN 12190 on prisms of 40 x 40 x 160 mm after the time indicated in below table 2.

**Table 2 - formulations (dosage in mass parts unless otherwise indicated) and results**

| **Example** | **Ref 1** | **Ref 2** | **1** | **2** |
|---|---|---|---|---|
| OPC | 100 | 100 | 100 | 100 |
| Metakaolin | 11 | | | |
| Fly ash | | 40 | 40 | 45 |
| Silica fume | 5 | 10 | 6 | 6 |
| Filler 1 | 267 | | | |
| Filler 2 | | | | 50 |
| Sand | 137 | 102 | 102 | 70 |
| CaSO₄ | 2.4 | | | 2.4 |
| PCE | 2 | 1 | 1 | 2 |
| Defoamer | 0.06 | | | 0.06 |
| Fiber [w%]* | | | | 14 |
| Water | 26 | 32 | 26 | 26 |
| Slump flow [mm] | n.m. | 403 | 378 | 285 |
| Shrinkage** [mm/m] | n.m. | -0.8 | +0.05 | -0.4 |
| FS @ 1 d [MPa] | n.m. | 7 | 9.9 | 3.9 |
| CS @ 1 d [MPa] | n.m. | 37.8 | 59 | 15.2 |
| FS @ 7 d [MPa] | n.m. | 8.31 | 11.8 | 23.2 |
| CS @ 7 d [MPa] | n.m. | 97.4 | 108.7 | 149.7 |
| FS @ 28 d [MPa] | n.m. | 8.7 | 13.5 | 55.5 |
| CS @ 28 d [MPa] | n.m. | 137.0 | 151.6 | 191.2 |

| | | | | |
|---|---|---|---|---|
| * w% relative to the total dry weight of the composition ** positive values indicate expansion, negative values indicated shrinkage n.m.: cannot be measured because of insufficient wetting | | | | |

## Claims

1. Hydraulic composition comprising
a) 100 mass parts of Portland Cement,
b) 20 - 60, preferably 45 - 55, mass parts of at least one pozzolane,
c) 30 - 120 mass parts, preferably 50 - 85 mass parts of at least one aggregate, preferably sand, having an average particle size D50 of between 63 µm and 8 mm, preferably between 200 µm and 3 mm,
d) 0.01 - 10 mass parts of a cement dispersant (powder or liquid form), and
e) not more than 30 mass parts, preferably 15 - 25 mass parts of water.

2. The hydraulic composition according to claim 1, **characterized in that** the at least one pozzolane is selected from clays, preferably calcined clays, especially metakaolin, fly ash, slag, preferably ground granulated blast furnace slag, silica fume, or mixtures thereof.

3. The hydraulic composition according to at least one of claims 1 or 2, **characterized in that** the at least one pozzolane is a mixture of fly ash and silica fume.

4. The hydraulic composition according to claim 3, **characterized in that** a weight ratio between fly ash and silica fume is between 2:1 - 10:1, preferably 6:1 - 7:1.

5. The hydraulic composition according to at least one of the preceding claims, **characterized in that** the cement dispersant is a comb polymer.

6. The hydraulic composition according to claim 5, **characterized in that** the comb polymer comprises
(i) repeating units **A** of the general structure (**I**), 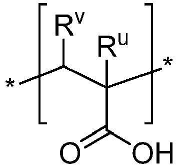 and
(ii) repeating units B of the general structure (II), 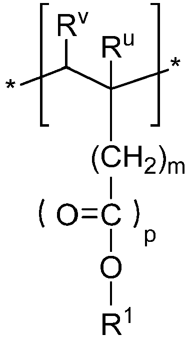 where
each R^{u} independently of another is hydrogen or is a methyl group,
each R^{v} independently of another is hydrogen or is COOM, where M is H, an alkali metal, an alkaline earth metal, or an ammonium group,
m = 0, 1, 2 or 3,
p = 0 or 1,
each R¹ independently of another is -[YO]ₙ-R⁴, where Y is an alkylene group with 2 - 4 carbon atoms, and R⁴ is H, an alkyl, cycloalkyl, or alkyaryl group with 1 - 20 carbon atoms, n = 2 - 350, and
the repeating units **A** and **B** are present in the comb polymer in a molar ratio of **A : B** between 10 : 90 - 90 :10.

7. The hydraulic composition according to at least one of the preceding claims, **characterized in that** it additionally comprises 1 - 5 mass parts of a source of calcium sulfate, preferably of anhydrite.

8. The hydraulic composition according to at least one of the preceding claims, **characterized in that** additionally comprises 10 - 250, preferably 30 - 100, mass parts of a filler having an average particle size D₅₀ of below 200 µm, preferably below 150 µm, especially below 63 µm.

9. The hydraulic composition according to at least one of the preceding claims, **characterized in that** it additionally comprises fibers, preferably metallic fibers or fibers made from thermoplastic materials, especially steel fibers, coated steel fibers, brass coated steel fibers, carbon fibers, or fibers made from polyethylene and/or polypropylene.

10. The hydraulic composition according to at least one of the preceding claims, **characterized in that** it additionally comprises a defoamer.

11. Method for the production of a hydraulic composition as claimed in at least one of claims 1 - 10, said method comprising the steps of
a) preparing a dry mix comprising Portland Cement, pozzolane, filler, and aggregate, and
b) admixing water to the dry mix obtained in step a),
wherein cement dispersant is added during preparation of the dry mix in step a) and/or together with the mixing water in step b)

12. Use of a hydraulic composition as claimed in at least one of claims 1 - 10 or prepared in a method as claimed in claim 10 for the construction of new buildings, for the repair of existing buildings, or as a grouting material.

13. Bridge deck comprising a hardened hydraulic composition as claimed in at least one of claims 1 - 10 or prepared in a method as claimed in claim 11.
